# EUROPÄISCHE PATENTANMELDUNG

(11) **EP 1 414 234 A1**
(43) Veröffentlichungstag der Anmeldung: **28.04.2004**
(21) Anmeldenummer: 03023482.7
(22) Anmeldetag: 18.10.2003
(51) Int. Cl.: H04N 5/00, H04N 7/62, H04N 7/167, H04N 5/913

(54) **Verfahren und Vorrichtung zur Aufzeichnung und Wiedergabe**

(30) Priorität: 25.10.2002 DE 10249680
(71) Anmelder: GRUNDIG Aktiengesellschaft, 90471 Nürnberg (DE)
(72) Erfinder: Horn, Bernhard, 91031 Forchheim (DE)

(57) **Zusammenfassung**

Die vorliegende Erfindung betrifft ein Verfahren und eine Vorrichtung zur Aufzeichnung und Wiedergabe von verschlüsselten, digitalen audiovisuellen Daten.

Bei dem Verfahren und der Vorrichtung werden bei einer Aufzeichnung von verschlüsselten, digitalen audiovisuellen Daten zusätzlich Zeitinformationen über den Zeitpunkt der Aufzeichnung in einer verwendeten Speichereinrichtung aufgezeichnet. Bei einer Wiedergabe der verschlüsselten, digitalen audiovisuellen Daten werden zusätzlich auch die aufgezeichneten Zeitinformationen über den Zeitpunkt der Aufzeichnung wiedergegeben und für die Entschlüsselung der verschlüsselten, digitalen audiovisuellen Daten verwendet.

## Beschreibung

Die vorliegende Erfindung betrifft ein Verfahren und eine Vorrichtung zur Aufzeichnung und Wiedergabe von verschlüsselten, digitalen audiovisuellen Daten.

Es ist bekannt, digitale audiovisuelle Daten auf Massenspeichermedien wie Festplatte (Hard Disk, HD) oder beschreibbaren optischen Speichern zu speichern und wiederzugeben. Ebenso ist es bekannt, digitale audiovisuelle Daten in verschlüsselter Form zu speichern.

Bei der Wiedergabe derartiger verschlüsselter, digitaler audiovisueller Daten von den Massenspeichermedien treten jedoch häufig Probleme auf. Diese Probleme entstehen bei der Entschlüsselung der verschlüsselten, digitalen audiovisuellen Daten, da während der Entschlüsselung in den verschlüsselten, digitalen audiovisuellen Daten enthaltene Zeitinformationen mit von der Vorrichtung zur Aufzeichnung und Wiedergabe stammenden Zeitinformationen verglichen werden. Da die in den verschlüsselten, digitalen audiovisuellen Daten enthaltenen Zeitinformationen einer Zeit zum Zeitpunkt der Aufzeichnung der verschlüsselten, digitalen audiovisuellen Daten entsprechen, stimmen diese Zeitinformationen zu einem späteren Zeitpunkt, bei der Wiedergabe, nicht mit den von der Vorrichtung zur Aufzeichnung und Wiedergabe zur Verfügung gestellten Zeitinformationen überein. Die Entschlüsselung der wiedergegebenen, verschlüsselten, digitalen audiovisuellen Daten schlägt deshalb fehl.

Es ist daher Aufgabe der vorliegenden Erfindung, ein Verfahren und eine Vorrichtung zur Aufzeichnung und Wiedergabe von verschlüsselten, digitalen audiovisuellen Daten anzugeben, die zur Aufzeichnung und Wiedergabe verschlüsselter, digitaler audiovisueller Daten geeignet sind.

Bei der vorliegenden Erfindung wird diese Aufgabe durch die Merkmale der Ansprüche 1 und 5 gelöst.

Bei der Erfindung wird dabei von der Überlegung ausgegangen, daß bei einer Aufzeichnung zusammen mit verschlüsselten, digitalen audiovisuellen Daten Zeitinformationen über den Zeitpunkt der Aufzeichnung in einer verwendeten Speichereinrichtung aufgezeichnet werden. Bei einer Wiedergabe der verschlüsselten, digitalen audiovisuellen Daten werden zusätzlich auch die aufgezeichneten Zeitinformationen über den Zeitpunkt der Aufzeichnung wiedergegeben und für die Entschlüsselung der verschlüsselten digitalen audiovisuellen Daten verwendet.

Der Vorteil der Erfindung ist darin zu sehen, daß es bei der Wiedergabe möglich ist, die Zeitinformationen über den Zeitpunkt der Aufzeichnung dazu zu nutzen, die verschlüsselten, digitalen audiovisuellen Daten zu entschlüsseln, da die aufgezeichneten Zeitinformationen über den Zeitpunkt der Aufzeichnung, den in den verschlüsselten, digitalen audiovisuellen Daten enthaltenen Zeitinformationen entsprechen.

Weitere Vorteile der vorliegenden Erfindung ergeben sich aus den abhängigen Ansprüchen sowie der nachfolgenden Beschreibung eines Ausführungsbeispiels einer erfindungsgemäßen Vorrichtung anhand von Figuren.

Es zeigt:
- Figur 1: ein Prinzipschaltbild einer erfindungsgemäßen Vorrichtung für die Aufzeichnung und Wiedergabe von verschlüsselten, digitalen audiovisuellen Daten, während einer Aufzeichnung, und
- Figur 2: das Prinzipschaltbild der erfindungsgemäßen Vorrichtung für die Aufzeichnung und Wiedergabe von verschlüsselten, digitalen audiovisuellen Daten nach Figur 1, während einer Wiedergabe.

Zur Erleichterung des Verständnisses der vorliegenden Erfindung sind in den Figuren nur die Bestandteile der Vorrichtung für die Aufzeichnung und Wiedergabe von verschlüsselten, digitalen audiovisuellen Daten dargestellt, die im Zusammenhang mit der Erfindung von Bedeutung sind. Gleiche Bestandteile in den Figuren weisen die selben Bezugszeichen auf.

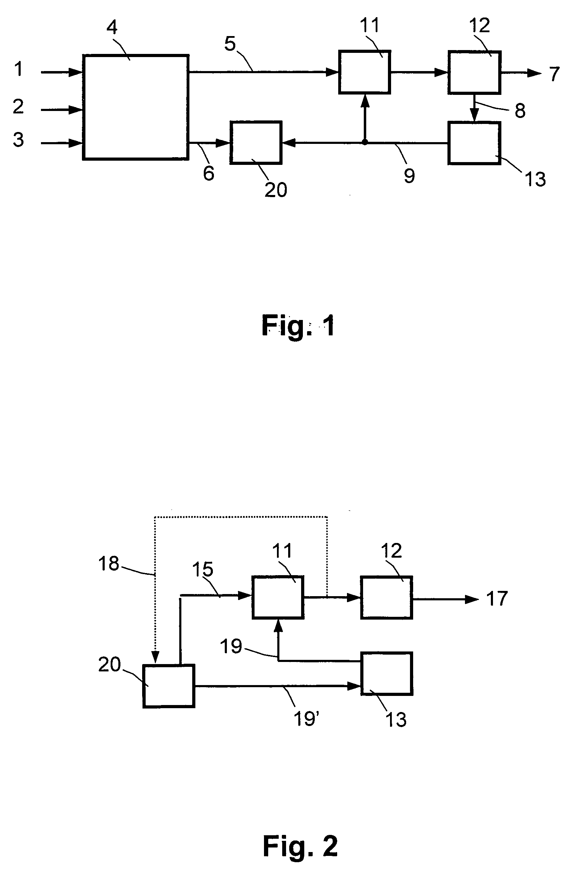

Figur 1 zeigt ein Prinzipschaltbild ein er erfindungsgemäßen Vorrichtung für die Aufzeichnung und Wiedergabe von verschlüsselten, digitalen audiovisuellen Daten, bei der Aufzeichnung von verschlüsselten, digitalen audiovisuellen Daten.

Das dargestellte Prinzipschaltbild stellt einen Teil einer digitalen Empfangseinrichtung dar, die z. B. Eingangssignale 1, 2, 3 verarbeitet, die nach dem DVB-Standard (Digital Video Broadcast) codiert sein können. Die Eingangssignale 1, 2, 3 können dabei verschiedene Quellen sein, z. B. Satelliten, terrestrische Sender, Breitbandkabel usw. Die Eingangssignale 1, 2, 3 werden von sogenannten Tranportdatenströmen gebildet, die mehrere Programme bzw. Filmbeiträge in Form von digitalen audiovisuellen Daten enthalten können, und die z. B. nach MPEG (Motion Picture Expert Group) codiert sind. Mittels eines Demultiplexers 4 können aus den Transportdatenströmen der Eingangssignale 1, 2, 3 ein oder mehrere, bestimmte Programme abgetrennt werden, die wiedergegeben und/oder aufgezeichnet werden sollen. Die vom Demultiplexer 4 abgetrennten Programme können von verschiedenen Eingangssignalen 1, 2, 3 stammen, sie können aber auch von einem einzigen der Eingangssignale 1, 2, 3 stammen. Die Programme bzw. Filmbeiträge können auch verschlüsselt sein, so daß eine Wiedergabe nur mit einer geeigneten Entschlüsselungseinrichtung möglich ist. Bei dem eingangs erwähnten DVB-Standard werden dazu üblicherweise Entschlüsselungseinrichtungen verwendet, die nach dem DVB-Common-Interface-Standard (ISO-IEC 50221) aufgebaut sind. Da in Empfangseinrichtungen üblicherweise nur eine derartige Entschlüsselungseinrichtung vorhanden ist, kann zu einem bestimmten Zeitpunkt nur ein verschlüsseltes Programm wiedergegeben oder aufgezeichnet werden.

Im in der Figur 1 dargestellten Beispiel wird ein erstes verschlüsseltes Programm 5, bzw. verschlüsselte, digitale audiovisuelle Daten, mittels einer Entschlüsselungseinrichtung 11 entschlüsselt und von einer Decodereinrichtung 12 für die Wiedergabe 7 decodiert, da die digitalen äudiovisuellen Daten, wie oben erwähnt, MPEG-codiert sind. Gleichzeitig wird ein weiteres verschlüsseltes Programm 6, bzw. verschlüsselte, digitale audiovisuelle Daten, von einer Speichereinrichtung 20 aufgezeichnet. Bei der Speichereinrichtung 20 kann es sich beispielsweise um eine magnetische Speichereinrichtung mit einer Magnetplatte (Hard-Disk) oder einem Band handeln. Ebenso kann es sich um eine optische oder magnetooptische Speichereinrichtung oder um eine Festkörperspeichereinrichtung handeln. Die in den Speichereinrichtungen jeweils verwendeten Speichermedien können austauschbar sein.

Zur Entschlüsselung der verschlüsselten, digitalen audiovisuellen Daten 5 durch die Entschlüsselungseinrichtung 11 liefert eine Zeitgebereinrichtung 13 Zeitinformationen 9 an die Entschlüsselungseinrichtung 11. In der Entschlüsselungseinrichtung 11 werden die Zeitinformationen 9 mit in den digitalen audiovisuellen Daten enthaltenen Zeitinformationen verglichen. In MPEG-codierten, digitalen audiovisuellen Daten ist z. B. eine TDT-Zeitinformation (Time and Date Table) enthalten. Die Entschlüsselung kann dabei nur für den Fall erfolgen, daß die Zeitinformationen der digitalen audiovisuellen Daten 5 mit den Zeitinformationen 9 der Zeitgebereinrichtung 13 übereinstimmen. Zur Synchronisierung der Zeitgebereinrichtung 13 werden die Zeitinformationen 8 der digitalen audiovisuellen Daten 5 von der Decodiereinrichtung 12 an die Zeitgebereinrichtung 13 übertragen.

Die Zeitinformationen 9 der Zeitgebereinrichtung 13 wird zudem an die Speichereinrichtung 20 übertragen, welche diese zusammen mit den verschlüsselten, digitalen audiovisuellen Daten 6 aufzeichnet.

Figur 2 zeigt das Prinzipschaltbild der erfindungsgemäßen Vorrichtung für die Aufzeichnung und Wiedergabe von verschlüsselten, digitalen audiovisuellen Daten nach Figur 1, während einer Wiedergabe.

Die von der Speichereinrichtung 20 wiedergegebenen, verschlüsselten, digitalen audiovisuellen Daten 15 werden von der Entschlüsselungseinrichtung 11 entschlüsselt und von der Decodiereinrichtung 12 für die Wiedergabe 17 decodiert. Bei der Wiedergabe der verschlüsselten, digitalen audiovisuellen Daten 15 durch die Speichereinheit 20 werden gleichzeitig die aufgezeichneten Zeitinformationen wiedergegeben, die - wie oben beschrieben - bei der Aufzeichnung zusammen mit den verschlüsselten, digitalen audiovisuellen Daten aufgezeichnet wurden. Die aufgezeichneten Zeitinformationen 19' werden von der Speichereinrichtung 20 an die Zeitgebereinrichtung 13 weitergeleitet, welche der Entschlüsselungseinrichtung 11 Zeitinformationen 19 für die Entschlüsselung zur Verfügung stellt. Da die von der Zeitgebereinrichtung 13 an die Entschlüsselungseinrichtung 11 gelieferten Zeitinformationen den aufgezeichneten Zeitinformationen 19' entspricht, die von der Speichereinrichtung 20 wiedergegeben werden, kann die Entschlüsselung der von der Speichereinrichtung 20 wiedergegebenen, verschlüsselten, digitalen audiovisuellen Daten erfolgen, da die in den wiedergegebenen, verschlüsselten, digitalen audiovisuellen Daten enthaltenen Zeitinformationen den aufgezeichneten Zeitinformationen entsprechen.

Die aufgezeichneten Zeitinformationen können während der Aufzeichnung laufend als aktuelle Zeitinformation aufgezeichnet werden. Bei der Wiedergabe steht demnach die benötigte Zeitinformation immer aktuell zur Verfügung.

Ebenso kann es vorgesehen sein, daß bei der Aufzeichnung nur eine Zeitinformation aufgezeichnet wird, die z. B. einem Anfangszeitpunkt der Aufzeichnung entspricht. Bei der Wiedergabe werden dann, ausgehend von der Zeitinformation des Anfangszeitpunkts, die aktuellen Zeitinformationen gebildet, indem zu der aufgezeichneten Zeitinformation, dem Anfangszeitpunkt, jeweils die Zeitdauer der Wiedergabe hinzuaddiert wird. Dies kann von der Zeitgebereinrichtung 13 vorgenommen werden.

Weiterhin ist es neben der eingangs beschriebenen Möglichkeit der Gewinnung der aufzuzeichnenden Zeitinformationen aus den Zeitinformationen von digitalen audiovisuellen Daten (TDT) auch möglich, die aufzuzeichnenden Zeitinformationen z. B. von einer Echtzeituhr abzuleiten, welche die bei der Aufzeichnung aktuelle Zeit angibt.

Die Zeitgebereinrichtung 13 kann darüber hinaus bei der beschriebenen Wiedergabe von verschlüsselten, digitalen audiovisuellen Daten, neben der aufgezeichneten Zeitinformation eine aktuelle Zeitinformation (z. B. die aktuelle Uhrzeit) verwalten. Diese Zeitinformation kann beispielsweise dazu verwendet werden, auf einer Anzeige der Vorrichtung dargestellt zu werden, um über die aktuelle Zeit zu informieren. Falls gewünscht, kann auch die aufgezeichnete Zeitinformation, insbesondere der Anfangszeitpunkt einer Aufzeichnung, dargestellt werden. Somit kann von der Anzeige der Vorrichtung abgelesen werden, wann die jeweilige Aufzeichnung erfolgt ist. Dazu kann Datum und Uhrzeit des Anfangszeitpunkts der Aufzeichnung dargestellt werden.

Neben der beschriebenen Wiedergabe der aufgezeichneten, verschlüsselten, digitalen audiovisuellen Daten kann es auch vorgesehen sein, daß die aufgezeichneten, verschlüsselten, digitalen audiovisuellen Daten entschlüsselt und in entschlüsselter Form wieder aufgezeichnet werden, wie dies in Figur 2 durch die gestrichelte Verbindung 18 angedeutet ist. Die kann beispielsweise dann erfolgen, wenn die Empfangseinrichtung nicht aktiv ist, oder dazu verwendet wird, ein unverschlüsseltes Programm, bzw. unverschlüsselte, digitale audiovisuelle Daten, die von einem der Eingangssignale 1, 2, 3 stammen, wiederzugeben. Die derart entschlüsselten digitalen audiovisuelle Daten können dann jederzeit wiedergegeben werden. Dies ist insbesondere auch mit einer anderen Vorrichtung für die Wiedergabe von digitalen audiovisuellen Daten möglich, die nicht über eine Entschlüsselungseinrichtung verfügt, falls die Speichereinrichtung 20 - wie oben beschrieben - über Speichermedien verfügt, die ausgewechselt werden können und somit in anderen Vorrichtungen für die Wiedergabe von digitalen audiovisuellen Daten verwendet werden können.

## Patentansprüche

1. Vorrichtung zur Aufzeichnung und Wiedergabe von verschlüsselten, digitalen audiovisuellen Daten, mit
einer Speichereinrichtung (20) für die Aufzeichnung und Wiedergabe, und einer Entschlüsselungseinrichtung (11),
**dadurch gekennzeichnet, daß**
eine Zeitgebereinrichtung (13) Zeitinformationen (9) bei einer Aufzeichnung von verschlüsselten, digitalen audiovisuellen Daten durch die Speichereinrichtung (20) zur Verfügung stellt, welche von der Speichereinrichtung (20) aufgezeichnet werden, und
die Speichereinrichtung (20) die aufgezeichneten Zeitinformationen (19') bei einer Wiedergabe der verschlüsselten, digitalen audiovisuellen Daten wiedergibt, wobei die wiedergegebenen, aufgezeichneten Zeitinformationen von der Entschlüsselungseinrichtung (11) für die Entschlüsselung der verschlüsselten, digitalen audiovisuellen Daten verwendet werden.

2. Vorrichtung nach Anspruch 1,
**dadurch gekennzeichnet, daß**
die Speichereinrichtung (20) die wiedergegebenen, aufgezeichneten Zeitinformationen (19') an die Zeitgebereinrichtung (13) überträgt, welche die wiedergegebenen, aufgezeichneten Zeitinformationen (19) der Entschlüsselungseinrichtung (11) zur Verfügung stellt.

3. Vorrichtung nach Anspruch 1 oder 2,
**dadurch gekennzeichnet, daß**
die aufgezeichneten Zeitinformationen der aktuellen Zeit während der Aufzeichnung der verschlüsselten, digitalen audiovisuellen Daten entsprechen.

4. Vorrichtung nach Anspruch 1 oder 2,
**dadurch gekennzeichnet, daß**
die aufgezeichneten Zeitinformationen einem Anfangszeitpunkt der Aufzeichnung der verschlüsselten, digitalen audiovisuellen Daten entsprechen.

5. Verfahren zur Aufzeichnung und Wiedergabe von verschlüsselten, digitalen audiovisuellen Daten, bei dem
die verschlüsselten, digitalen audiovisuellen Daten zusammen mit Zeitinformationen aufgezeichnet werden,
und bei dem
die aufgezeichneten Zeitinformationen zusammen mit der verschlüsselten, digitalen audiovisuellen Daten wiedergegeben werden, wobei die wiedergegebenen, aufgezeichneten Zeitinformationen für die Entschlüsselung der verschlüsselten, digitalen audiovisuellen Daten verwendet werden.

6. Verfahren nach Anspruch 5,
**dadurch gekennzeichnet, daß**
die aufgezeichneten Zeitinformationen der aktuellen Zeit während der Aufzeichnung der verschlüsselten, digitalen audiovisuellen Daten entsprechen.

7. Verfahren nach Anspruch 5,
**dadurch gekennzeichnet, daß**
die aufgezeichneten Zeitinformationen einem Anfangszeitpunkt der Aufzeichnung der verschlüsselten, digitalen audiovisuellen Daten entsprechen.
